# FASCICULE DE BREVET EUROPEEN

(11) **EP 3 007 843 B1**
(45) Date de publication et mention de la délivrance du brevet: **16.01.2019**
(21) Numéro de dépôt: 14734890.8
(22) Date de dépôt: 12.06.2014
(51) Int. Cl.: B22F 1/00, B22F 3/00, B22F 3/03, B22F 3/16, B29C 51/42, B30B 15/34, B29C 43/00, B29C 43/16, B29C 43/52, B22F 3/14

(54) **PROCEDE ET ENSEMBLE DE PRODUCTION D'UNE PIECE MECANIQUE PAR FRITTAGE D'UN MATERIAU METALLIQUE PULVERULENT**
VERFAHREN UND EINHEIT ZUR HERSTELLUNG EINES MECHANISCHEN TEILS DURCH SINTERN EINES PULVERMETALLMATERIALS
METHOD AND UNIT FOR PRODUCING A MECHANICAL PART BY SINTERING A POWDER METAL MATERIAL

(30) Priorité: 12.06.2013 FR 1355447
(43) Date de publication de la demande: 20.04.2016
(73) Titulaire: ETA SA Manufacture Horlogère Suisse, 2540 Grenchen (CH)
(72) Inventeur: CALVES, Paul, 42170 Saint-Just-Saint-Rambert (FR)
(74) Mandataire: Ravenel, Thierry Gérard Louis
(86) Numéro de dépôt international: PCT/FR2014/051433
(87) Numéro de publication internationale: WO 2014/199090

(56) Documents cités:
- EP-A1- 0 601 397
- DE-C- 356 716
- FR-A1- 2 924 192
- US-A- 6 012 392
- US-A1- 2007 224 075
- DATABASE WPI Week 198943 Thomson Scientific, London, GB; AN 1989-312124 XP002723521, & JP H01 210144 A (KUBOTA LTD) 23 août 1989 (1989-08-23)

## Description

La présente invention se rapporte à un procédé de production d'une pièce mécanique par frittage d'un matériau métallique pulvérulent et un ensemble de production permettant de mettre en oeuvre un tel procédé.

Un domaine d'application envisagé est celui de la mécanique en général pour réaliser, par exemple, des engrenages, des patins ou bien encore des bagues. Un autre domaine d'application visé est celui des applications biomédicales, par exemple pour réaliser des éléments de prothèse.

On désignera ici par un frittage, le traitement par lequel des grains d'une poudre comprimés dans un moule métallique, sont chauffés à une température inférieure à leur point de fusion de manière à les souder ensemble pour former une seule masse solide tout en conservant la forme donnée par le moule.

Des procédés connus en métallurgie des poudres permettent de réaliser des pièces mécaniques en agglomérant puis en frittant des poudres métalliques ou céramiques. Pour ce faire, dans une première étape de compaction on utilise une matrice présentant un orifice longitudinal traversant et à travers lequel on engage d'un côté un poinçon inférieur qui délimite alors une cavité ouverte et d'un autre côté un poinçon supérieur apte à venir refermer la cavité. La matrice est orientée de manière à ce que l'orifice longitudinal s'étende verticalement. Ainsi, la cavité peut alors être remplie d'une poudre, laquelle est retenue par le poinçon inférieur. Ensuite on vient positionner le poinçon supérieur à travers l'orifice longitudinal pour pouvoir refermer la cavité et appliquer un effort. La poudre est alors agglomérée et comprimée à force entre les deux poinçons. Un procédé de compaction particulier consiste à venir impacter le poinçon supérieur avec une énergie donnée pour produire l'effort nécessaire à la formation d'un comprimé. Une deuxième étape distincte de frittage consiste en un traitement en température de la pièce pour lui conférer ses propriétés mécaniques.

Toutefois, il s'avère que la pièce ainsi réalisée se déforme sensiblement après avoir été éjectée de la matrice et il peut également apparaitre des défauts de types retassures pouvant rendre la pièce inutilisable. Aussi, pour les pièces mécaniques de précision, il est nécessaire de venir usiner la pièce ainsi obtenu pour pouvoir la porter aux bonnes cotes.

On connait également du document FR 2924192 un procédé d'un joint d'étanchéité en polytétrafluoroéthylène à partir de grains poudre agglomérés et comprimés pour souder les grains entre eux. En outre on connait du document DE356716 un procédé pour la préparation d'alliages métalliques à haute teneur en graphite en partant de poudres métalliques.

Aussi, un problème qui se pose et que vise à résoudre la présente invention est de fournir un procédé qui permette aux pièces mécaniques obtenues par frittage d'un matériau pulvérulent de conserver leurs dimensions après leur éjection de la matrice.

Dans ce but, et selon un premier objet, la présente invention propose un procédé de production d'une pièce mécanique par frittage d'un matériau pulvérulent selon la revendication 1 du brevet.

Ainsi, une caractéristique de l'invention réside dans le refroidissement provoqué du corps solide tout en le maintenant sous pression. De la sorte, le corps solide est maintenu dans sa géométrie et ses dimensions grâce à la pression qui lui est appliquée et ce, durant toute l'étape de refroidissement. En outre, le procédé selon l'invention permet d'empêcher l'apparition des défauts liés au refroidissement, ce qui permet d'envisager la fabrication de pièces massives

Préférentiellement, le matériau métallique pulvérulent fourni est constitué de grains d'un matériau métallique pulvérulent à bas point de fusion, par exemple à une température inférieure à 800 °C. Des alliages à base de cuivre peuvent ainsi être mis en oeuvre par le procédé selon l'invention.

Selon un mode de mise en oeuvre de l'invention particulièrement avantageux, on agglomère sous pression ladite quantité donnée dudit matériau métallique pulvérulent à l'intérieur d'une cavité de symétrie cylindrique. Grâce à une cavité cylindrique, il est aisé d'entraîner en translation un poinçon à l'intérieur, pour venir compacter et agglomérer le matériau métallique pulvérulent.

En outre, et selon une variante de réalisation particulièrement avantageuse, on porte ledit seul corps solide à l'intérieur d'une autre cavité pour pouvoir dissiper ladite énergie thermique accumulée. Grâce au transfert du corps solide d'une cavité relativement chaude, vers une cavité relativement froide, il est possible de faire chuter plus brutalement la température du corps solide et ainsi figer les cotes de celui-ci. Selon une autre variante de réalisation, la dissipation d'énergie thermique accumulée dans le corps solide, est réalisée dans ladite une cavité.

Dans le but de simplifier le transfert du corps solide, on l'entraîne en translation de ladite une cavité de symétrie cylindrique vers ladite autre cavité présentant une même symétrie cylindrique. Et comme on l'expliquera ci-après, en portant les deux cavités de symétrie cylindrique dans le prolongement l'une de l'autre, le transfert est d'autant plus facilité.

De plus, préférentiellement, on agglomère sous pression ladite quantité donnée dudit matériau métallique pulvérulent à l'intérieur de ladite une cavité entre deux parois opposées. De la sorte, il est plus aisé de fournir une grande quantité d'énergie cinétique à la poudre de matériau métallique agglomérée et provoquer ainsi conjointement avec l'énergie thermique initiale, le soudage des grains de matériau métallique entre eux.

Selon un autre objet, la présente invention propose un ensemble de production de pièce mécanique par frittage de matériau métallique pulvérulent présentant des grains selon la revendication 6 du brevet.

Ainsi, grâce à l'échangeur thermique, lequel est situé autour du corps solide, on provoque la dissipation de l'énergie thermique qu'il a accumulée à la fois durant la phase de chauffage et au cours des chocs.

De plus, l'ensemble de productions selon l'invention comprend un outre un contre-poinçon apte à venir coaxialement en regard dudit poinçon. De la sorte, on forme deux parois opposées aptes à venir agglomérer et comprimer le matériau métallique pulvérulent avec une meilleure efficacité mécanique.

Préférentiellement, ladite une cavité présente une symétrie cylindrique. De la sorte, le poinçon et le contre-poinçon peuvent y être entraînés en translation coaxialement en regard l'un de l'autre. Partant, le corps solide est maintenu en pression entre le poinçon et le contre-poinçon, tandis qu'il s'appuie radialement contre la paroi de la cavité de la matrice, grâce à l'effet de la pression. Aussi, le corps solide peut être entraîné en translation axialement à l'intérieur de la cavité.

Selon une caractéristique de l'invention, ledit échangeur thermique définit une autre cavité présentant une même symétrie cylindrique, et ledit échangeur est apte à être relié à ladite matrice de façon que ladite autre cavité vienne s'ajuster dans le prolongement de ladite une cavité. De plus, le poinçon et le contre-poinçon sont aptes à venir traverser ladite autre cavité. De la sorte, le mouvement coaxial en translation du poinçon et du contre-poinçon entre lesquels est maintenu le corps solide, permet d'entraîner ce dernier à l'intérieur de ladite autre cavité. Ainsi, le corps solide est entraîné de la cavité de la matrice, chaude, vers la cavité de l'échangeur thermique, froide. Partant, la température du corps solide peut être abaissée brutalement tout en le maintenant en pression entre le poinçon et le contre-poinçon à l'intérieur de ladite autre cavité.

Avantageusement, ledit échangeur thermique présente deux demi-coquilles aptes à former ladite autre cavité. Les deux demi-coquilles sont ajustées en regard l'une de l'autre et elles sont mobiles transversalement entre une position écartée l'une de l'autre et une position rapprochée l'une de l'autre ou elles forment alors ladite autre cavité dans le prolongement de ladite une cavité de la matrice.

En outre, ledit échangeur thermique comporte, préférentiellement, des canaux de circulation d'un fluide caloporteur. Ceux-ci sont ménagés dans les deux demi-coquilles et notamment au voisinage des parois formant ladite autre cavité. On expliquera plus en détail dans la suite de la description l'agencement des canaux de circulation à travers l'échangeur thermique.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- les Figures 1A-1D sont des vues schématiques partielles d'un ensemble de production d'une pièce mécanique par frittage dans les différentes phases du procédé de mise en oeuvre ;
- la Figure 2A est une vue schématique de dessus d'un élément de l'ensemble de production représenté sur la figure 1D; et,
- la Figure 2B est une vue schématique en perspective d'un élément représenté sur la figure 2A.

Le procédé de production selon l'invention et l'ensemble de production permettant de le mettre en oeuvre sont adaptés aux matériaux métalliques pulvérulents. Avantageusement, ils sont adaptés aux matériaux métalliques pulvérulents présentant une température de fusion sensiblement inférieure à 800 °C. Aussi, les alliages métalliques de bas point de fusion peuvent être mises en oeuvre par un tel procédé.

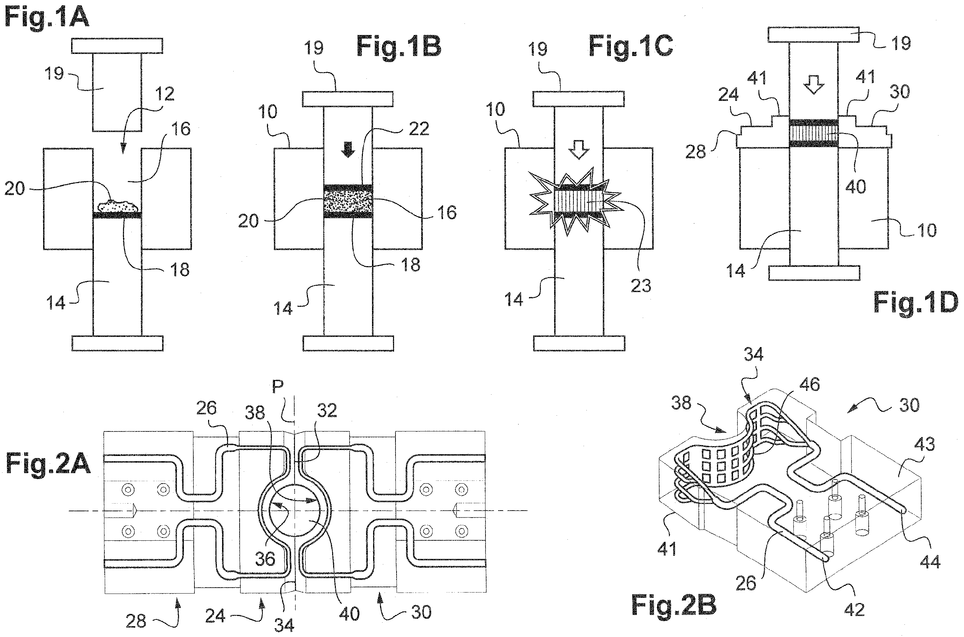

On se référera aux figures 1A à 1D pour décrire en détail schématiquement les éléments essentiels d'un outillage et les différentes étapes du procédé de compaction selon l'invention.

La figure 1A illustre schématiquement une matrice 10 présentant un orifice cylindrique traversant de symétrie circulaire 12. La matrice 10 est équipée d'un dispositif de chauffage non représenté. Selon une première variante, on insère des cartouches chauffantes fonctionnant par effet Joule à travers la matrice 10. Selon une autre variante, on ménage des canaux de circulation d'un fluide caloporteur chaud à travers la matrice 10 pour venir la chauffer. Selon encore une autre variante, des moyens de chauffage par induction sont mis en oeuvre. La matrice 10 est équipée d'un contre-poinçon 14 partiellement engagé dans la partie inférieure de la matrice 10 à travers l'orifice cylindrique 12 en définissant une cavité ouverte 16 à l'intérieur de la matrice 10. L'extrémité supérieure du contre-poinçon 14 est équipée d'un disque d'étanchéité inférieur 18 formant une paroi plane inférieure de la cavité 16. Le disque d'étanchéité inférieur 18 permet de fermer l'extrémité inférieure de l'orifice cylindrique 12, et partant de la cavité 16, de manière étanche.

De plus, la figure 1A illustre un poinçon 19 situé en regard de la cavité 16 et à distance de la matrice 10. Le poinçon 19 présente une section identique à celle du contre-poinçon 14 et est positionné coaxialement. Par ailleurs, le contre-poinçon 14 et le poinçon 19 sont également portés en température par des moyens de chauffage non représentés. Ils peuvent être chauffés par des colliers chauffants et/ou par un système de coquilles mobiles comprenant des cartouches chauffantes, lesquelles coquilles mobiles viennent enserrer l'extrémité active des poinçons.

Dans une première phase du procédé, on introduit le matériau métallique pulvérulent 20, par exemple un alliage de cuivre, à l'intérieur de la cavité 16 sur le disque d'étanchéité 18. Par exemple, on verse 60 g de poudre dudit alliage à l'intérieur de la cavité 16. Au préalable, la poudre métallique est portée, par exemple dans une étuve, à une température voisine de 700 °C. Au surplus, la matrice 10 et les parties du poinçon 19 et du contre-poinçon 14 en contact avec le matériau métallique, sont portées à température, grâce à des dispositifs de chauffage et de régulation thermique propres.

Dans une deuxième phase du procédé, illustrée sur la figure 1B, on introduit le poinçon 19 A l'intérieur de la cavité 16, et on vient, selon une première séquence, pré-compacter le matériau métallique pulvérulent 20 de manière à en chasser l'air. Aussi, le poinçon 19 est dépourvu de disque d'étanchéité, et ainsi, l'air s'échappe entre la paroi de la cavité 16 et le poinçon 19 lui-même. L'effort exercé par le poinçon 19 sur le matériau métallique pulvérulent 20 est ici de 5 tonnes pendant une durée comprise par exemple entre une et cinq secondes.

Dans une seconde séquence, le poinçon 19 est extrait de la cavité 16 et on l'équipe d'un disque d'étanchéité supérieur 22 pour venir pré-compacter à nouveau le matériau métallique pulvérulent 20. Aussi, la cavité 16 renfermant le matériau métallique pulvérulent 20 est-elle étanche. Cette seconde séquence est d'une durée de 30 secondes par exemple et l'effort exercé par le poinçon 19 est d'environ 10 tonnes. Durant cette seconde séquence, la température du matériau métallique pulvérulent 20 s'homogénéise et se porte au voisinage de la température de travail fixé à 118 °C.

Dans une troisième phase, illustrée sur la figure 1C, où l'on vient fritter précisément la poudre métallique 20, le poinçon 19 est alors soumis à des impacts.

Dans l'exemple présenté ici, l'énergie d'impact est de l'ordre de 1680 J et on porte 40 impacts. De la sorte, les grains de poudre métallique 20 atteignent localement le point de fusion du matériau ce qui a pour effet de venir former une seule phase commune entre les grains. L'apparition de la phase fondue apparait préférentiellement aux joints de grains lors des premiers impacts puis la proportion de cette phase augmente alors au fur à mesure des impacts. Et ainsi, l'ensemble se consolide durant la phase de refroidissement illustré sur la figure 1D. On obtient de la sorte un corps solide 23 d'une seule pièce.

Cette dernière figure illustre en effet tous les éléments illustrés sur les figures précédentes et au surplus un échangeur thermique 24 surmontant la matrice 10.

On se référera tout d'abord aux figures 2A et 2B représentant en détail l'échangeur thermique 24 avant de décrire plus en détail la figure 1D.

La figure 2A illustre l'échangeur thermique 24 vu de dessus avec en transparence, des canaux de circulation d'un fluide caloporteur 26. L'échangeur thermique 24 présente deux demi-parties 28, 30 symétriques l'une de l'autre par rapport à un plan axial P. Les demi-parties 28, 30 présentent respectivement des faces frontales 32, 34, dans lesquelles sont ménagées deux évidements 36, 38 de symétrie cylindrique formant deux demi-coquilles. Ainsi, les deux demi-coquilles 36, 38 définissent une cavité de refroidissement 40 de symétrie cylindrique de révolution.

On retrouve sur la figure 2B, en vue arrière de trois quarts l'une des deux demi-parties 30 de l'échangeur thermique 24. Apparaissent ainsi la face frontale 34, située dans une partie frontale 41, laquelle est opposée à une partie arrière 43, et la demi-coquille formée par l'évidement 38 ménagée dans la face frontale 34.

Apparaissent également clairement à travers le corps de la demi-partie 30 de l'échangeur thermique 24, les canaux de circulation 26 du fluide caloporteur. Celui-ci est par exemple de l'eau froide. Ils sont ainsi divisés en deux branches opposées 42, 44 qui se rejoignent au niveau de la partie frontale 41 à travers un réseau 46 de conduits formant un écran réfrigérant dans l'épaisseur de la partie frontale 41 autour de l'évidement 38. De manière symétrique, l'autre demi-partie 28 présente les mêmes caractéristiques.

Ainsi, le fluide froid est injecté dans la branche 42 et s'écoule au niveau de la partie frontale 41 à travers le réseau 46 de conduits formant l'écran réfrigérant autour de l'évidement 38 qui sera en contact direct avec la pièce à refroidir. Ce réseau est défini de façon à maximiser la surface d'échange thermique au plus proche de la pièce et pour pouvoir ainsi évacuer le maximum de calories. Le fluide ressort alors par la branche 44 opposée à la branche 42. Ce fluide pourra avantageusement être réintroduit après refroidissement en entrée du circuit par la branche 42 pour constituer un circuit

Ainsi, lorsque les deux demi-parties 28, 30 sont ajustées à force, face frontale 32 contre face frontale 34, elles délimitent ensemble la cavité de refroidissement 40 représentée sur la figure 2A, laquelle présente une section identique à celle de la cavité 16 de la matrice 10 illustrée sur les figures 1A-1D.

On retrouve sur la figure 1D, non seulement la matrice 10 mais aussi l'échangeur thermique 24, formé de ses deux demi-parties 28, 30. Sont ici représentées les seules parties frontales 41, face frontale 36 contre face frontale 38. Ainsi, les parties frontales 41 viennent s'appuyer non seulement latéralement l'une contre l'autre mais aussi axialement sur les bords supérieurs de la matrice 10, de façon que la cavité de refroidissement 40 vienne s'étendre au regard de l'orifice cylindrique 42, dans le prolongement de la cavité 16 de la matrice 10.

De la sorte, à partir de la position du corps solide 23 représenté sur la figure 1C, situé à l'intérieur de la matrice 10 dans la cavité 16 et pris en étau entre les deux poinçons 14, 19, on vient entraîner le corps solide 23 à l'intérieur de la cavité de refroidissement 40 de l'échangeur thermique 24 en entraînant en translation ensemble les deux poinçons 14, 19.

Ainsi, le corps solide 23 est entraîné de la cavité 16 de la matrice 10, dans la cavité de refroidissement 40 de l'échangeur thermique 24 tandis que la pression exercée par les deux poinçons 14, 19 sur le corps solide 23 demeure. Elle est par exemple portée à 15 tonnes pendant 120 secondes.

L'ensemble de production décrit ici en référence aux figures et permettant d'illustrer le procédé selon l'invention, peut revêtir une autre forme et par exemple, comporter une matrice présentant une pluralité d'empreintes ou cavités associées respectivement à une pluralité de poinçons et contre-poinçons.

D'autres paramètres tels que la pression maintenue sur le corps solide 23 lors du refroidissement et le temps de maintien de la pression permettent d'ajuster également les caractéristiques mécaniques du matériau final.

## Revendications

1. Procédé de production d'une pièce mécanique par frittage d'un matériau pulvérulent (20), ledit procédé étant du type comprenant les étapes suivantes :
- on fournit un matériau métallique pulvérulent (20) présentant des grains, ledit matériau métallique pulvérulent présentant une température de fusion déterminée ;
- on agglomère sous pression à l'intérieur d'une cavité (16) d'une matrice (10) une quantité
donnée dudit matériau métallique pulvérulent ;
- on fournit de l'énergie thermique à ladite quantité donnée de matériau métallique pulvérulent (20) pour la porter à une température donnée inférieure à ladite température de fusion ;
- on choque ladite quantité donnée de matériau métallique pulvérulent agglomérée et portée à ladite température donnée pour pouvoir souder entre eux les grains dudit matériau métallique pulvérulent de façon à obtenir un seul corps solide (23) ;
**caractérisé en ce qu'**on maintient ledit seul corps solide (23) sous pression, **en ce qu'**on provoque la dissipation de l'énergie thermique accumulée dans ledit corps solide (23) pour obtenir ladite pièce mécanique et **en ce que** l'étape de dissipation de l'énergie thermique est réalisée à l'aide d'un échangeur thermique à travers lequel circule un liquide caloporteur, **en ce que** ledit échangeur thermique (24) définit une autre cavité (40) présentant une même symétrie cylindrique, et
**en ce que** ledit échangeur thermique (24) est apte à venir en regard de ladite matrice (10) de façon que ladite autre cavité (40) vienne s'ajuster dans le prolongement de ladite une cavité (16)
et **en ce qu'**on entraîne en translation ledit seul corps solide (23) de ladite une cavité (16) de symétrie cylindrique vers ladite autre cavité (40).

2. Procédé de production selon la revendication 1, **caractérisé en ce qu'**on fournit un matériau métallique pulvérulent à bas point de fusion.

3. Procédé de production selon la revendication 1 ou 2, **caractérisé en ce qu'**on agglomère sous pression ladite quantité donnée dudit matériau métallique pulvérulent à l'intérieur de la d'une cavité (16) de symétrie cylindrique.

4. Procédé de production selon l'une quelconque des revendications 1 à 3, **caractérisé en ce qu'**on porte ledit seul corps solide (23) à l'intérieur d'une autre cavité (40) pour pouvoir dissiper ladite énergie thermique accumulée.

5. Procédé de production selon l'une quelconque des revendications 1 à 4, **caractérisé en ce qu'**on agglomère sous pression ladite quantité donnée dudit matériau métallique pulvérulent à l'intérieur de ladite une cavité (16) entre deux parois opposées.

6. Ensemble de production de pièce mécanique par frittage de matériau métallique pulvérulent présentant des grains, ledit matériau métallique pulvérulent présentant une température de fusion déterminée, ledit ensemble comprenant d'une part une matrice (10) présentant une cavité (16) apte à recevoir une quantité donnée de matériau métallique pulvérulent (20) et d'autre part un poinçon (19) pour pouvoir agglomérer sous pression ladite quantité donnée dudit matériau métallique pulvérulent, ladite matrice (10) comportant un dispositif de chauffage pour pouvoir fournir de l'énergie thermique à ladite quantité donnée de matériau métallique pulvérulent (20) et la porter à une température donnée inférieure à ladite température de fusion, ledit ensemble comprenant en outre un dispositif de frappe dudit poinçon pour pouvoir choquer ladite quantité donnée de matériau métallique pulvérulent agglomérée et portée à ladite température donnée, de façon à pouvoir souder entre eux les grains dudit matériau métallique pulvérulent de façon à obtenir un seul corps solide (23) ;
**caractérisé en ce qu'**il comprend en outre un échangeur thermique (24) pour provoquer la dissipation de l'énergie thermique accumulée dans ledit corps solide (23), tandis que ledit poinçon (19) maintient ledit seul corps solide (23) sous pression de manière à obtenir ladite pièce mécanique et
**en ce que** ledit échangeur thermique (24) définit une autre cavité (40) présentant une même symétrie cylindrique, et **en ce que** ledit échangeur thermique (24) est apte à venir en regard de ladite matrice (10) de façon que ladite autre cavité vienne s'ajuster dans le prolongement de ladite une cavité (16).

7. Ensemble de production selon la revendication 6, **caractérisé en ce qu'**il comprend un outre un contre-poinçon (14) apte à venir coaxialement en regard dudit poinçon (19).

8. Ensemble de production selon la revendication 6 ou 7, **caractérisé en ce que** ladite une cavité (16) présente une symétrie cylindrique.

9. Ensemble de production selon la revendication 7, **caractérisé en ce que** ledit échangeur thermique (24) présente deux demi-coquilles (36, 38) aptes à former ladite autre cavité (40).

10. Ensemble de production selon l'une quelconque des revendications 6 à 9, **caractérisé en ce que** ledit échangeur thermique (24) comporte des canaux de circulation (26) d'un fluide caloporteur.

## Patentansprüche

1. Verfahren zum Herstellen eines mechanischen Teils durch Sintern eines pulverförmigen Materials (20), wobei das Verfahren von dem Typ ist, der die folgenden Schritte umfasst:
- Bereitstellen eines pulverförmigen metallischen Materials (20), das Körner enthält, wobei das pulverförmige metallische Material eine bestimmte Schmelztemperatur besitzt;
- Agglomerieren unter Druck einer gegebenen Menge des pulverförmigen metallischen Materials in einem Hohlraum (16) einer Matrize (10);
- Zuführen von Wärmeenergie zur gegebenen Menge des pulverförmigen metallischen Materials (20), um es auf eine vorbestimmte Temperatur unterhalb der Schmelztemperatur zu bringen;
- Schocken der gegebenen Menge des pulverförmigen metallischen Materials, das agglomeriert und auf die vorbestimmte Temperatur gebracht wurde, um die Körner des metallischen Materials miteinander verschmelzen zu können, um einen einzelnen Festkörper (23) zu erhalten;
**dadurch gekennzeichnet, dass** der einzelne Festkörper (23) mit Druck gehalten wird,
dass die Abführung der in dem Festkörper (23) angesammelten Wärmeenergie hervorgerufen wird, um das mechanische Teil zu erhalten,
und dass der Schritt des Abführens der Wärmeenergie mithilfe eines Wärmetauschers erfolgt, durch den eine Wärmeübertragungsflüssigkeit zirkuliert,
dass der Wärmetauscher (24) einen weiteren Hohlraum (40) definiert, der dieselbe Zylindersymmetrie aufweist,
dass der Wärmetauscher (24) an einen Ort gegenüber der Matrize (10) gelangen kann, derart, dass sich der weitere Hohlraum (40) in der Verlängerung des einen Hohlraums (16) anordnen kann, und
dass der einzelne Festkörper (23) in dem einen Hohlraum (16) mit Zylindersymmetrie zu dem anderen Hohlraum (40) translatorisch angetrieben wird.

2. Herstellungsverfahren nach Anspruch 1, **dadurch gekennzeichnet, dass** ein pulverförmiges metallisches Material mit niedrigem Schmelzpunkt bereitgestellt wird.

3. Herstellungsverfahren nach Anspruch 1 oder 2, **dadurch gekennzeichnet, dass** die gegebene Menge des pulverförmigen metallischen Materials in dem Hohlraum (16) mit Zylindersymmetrie unter Druck agglomeriert wird.

4. Herstellungsverfahren nach einem der Ansprüche 1 bis 3, **dadurch gekennzeichnet, dass** der einzelne Festkörper (23) in einen weiteren Hohlraum (40) getragen wird, um die angesammelte Wärmeenergie abführen zu können.

5. Herstellungsverfahren nach einem der Ansprüche 1 bis 4, **dadurch gekennzeichnet, dass** die gegebene Menge des pulverförmigen metallischen Materials in dem einen Hohlraum (16) zwischen den zwei gegenüberliegenden Wänden unter Druck agglomeriert wird.

6. Anordnung zum Herstellen eines mechanischen Teils durch Sintern eines pulverförmigen metallischen Materials, das Körner aufweist, wobei das pulverförmige metallische Material eine bestimmte Schmelztemperatur besitzt, wobei die Anordnung einerseits eine Matrize (10), die einen Hohlraum (16) aufweist, der geeignet ist, eine bestimmte Menge des pulverförmigen metallischen Materials (20) aufzunehmen, und andererseits einen Stempel (19) umfasst, um die gegebene Menge des pulverförmigen metallischen Materials unter Druck agglomerieren zu können, wobei die Matrize (10) eine Heizvorrichtung aufweist, um der gegebenen Menge des pulverförmigen metallischen Materials (20) Wärmeenergie zuführen zu können und es auf einer vorbestimmten Temperatur, die niedriger als die Schmelztemperatur ist, halten zu können, wobei die Anordnung ferner eine Vorrichtung zum Schlagen auf den Stempel umfasst, um die gegebene Menge des agglomerierten und auf der vorbestimmten Temperatur gehaltenen pulverförmigen metallischen Materials schocken zu können, um die Körner des pulverförmigen metallischen Materials miteinander verschweißen zu können, um einen einzelnen Festkörper (23) zu erhalten;
**dadurch gekennzeichnet, dass** sie ferner einen Wärmetauscher (24) umfasst, um die Abführung der in dem Festkörper (23) angesammelten Wärmeenergie zu bewirken, während der Stempel (19) den einzelnen Festkörper (23) mit Druck beaufschlagt, um das mechanische Teil zu erhalten,
dass der Wärmetauscher (24) einen weiteren Hohlraum (40) definiert, der dieselbe Zylindersymmetrie aufweist, und
dass der Wärmetauscher (24) an einen Ort gegenüber der Matrize (10) gelangen kann, derart, dass der weitere Hohlraum in eine Ausrichtung in der Verlängerung des einen Hohlraums (16) gelangt.

7. Herstellungsanordnung nach Anspruch 6, **dadurch gekennzeichnet, dass** sie ferner einen Gegenstempel (14) umfasst, der koaxial gegenüber dem Stempel (19) anordbar ist.

8. Herstellungsanordnung nach Anspruch 6 oder 7, **dadurch gekennzeichnet, dass** der eine Hohlraum (16) eine Zylindersymmetrie aufweist.

9. Herstellungsanordnung nach Anspruch 7, **dadurch gekennzeichnet, dass** der Wärmetauscher (24) zwei Halbschalen (36, 38) aufweist, die geeignet sind den weiteren Hohlraum (40) zu bilden.

10. Herstellungsanordnung nach einem der Ansprüche 6 bis 9, **dadurch gekennzeichnet, dass** der Wärmetauscher (24) Zirkulationskanäle (26) für ein Wärmeübertragungsfluid aufweist.

## Claims

1. Method for production of a mechanical component by sintering a pulverulent material (20), said method being of the type comprising the following steps:
- there is provided a pulverulent metallic material (20) comprising grains, said pulverulent metallic material having a predetermined melting temperature;
- a given quantity of said pulverulent metallic material is agglomerated under pressure inside a cavity (16) of a die (10);
- thermal energy is provided to said given quantity of pulverulent metallic material (20) to bring said material to a given temperature lower than said melting temperature;
- said given quantity of agglomerated pulverulent metallic material brought to said given temperature is shocked in order to bind or weld the grains of said pulverulent metallic material to each other so as to obtain one solid body (23);
**characterized in that** said one solid body (23) is maintained under pressure and **in that** the thermal energy accumulated in said solid body (23) is made to dissipate in order to obtain said mechanical component and **in that** the thermal energy dissipating step is achieved with the aid of a heat exchanger through which circulates a heat exchange fluid, **in that** said heat exchanger (24) defines another cavity (40) having an identical cylindrical symmetry, and **in that** said heat exchanged (24) is adapted to move opposite said die (10) such that said other cavity (40) coincide with the extension of said one cavity (16), and **in that** said one solid body (23) is driven from said one cavity (16) having a cylindrical symmetry towards said other cavity (40).

2. Production method according to claim 1, **characterized in that** there is provided a pulverulent metallic material with a low melting point.

3. Production method according to claim 1 or 2, **characterized in that** said given quantity of said pulverulent metallic material is agglomerated under pressure inside said cavity (16) of cylindrical symmetry.

4. Production method according to any of claims 1 to 3, **characterized in that** said one solid body (23) is placed inside another cavity (40) in order to dissipate said accumulated thermal energy.

5. Production method according to any of claims 1 to 4, **characterized in that** said given quantity of said pulverulent metallic material is agglomerated under pressure inside said one cavity (16) between opposite walls.

6. Assembly for production of a mechanical component by sintering pulverulent metallic material comprising grains, said pulverulent metallic material having a determined melting temperature, said assembly including, on the one hand, a die (10) having a cavity (16) adapted to receive a given quantity of pulverulent metallic material (20), and on the other hand, a punch (19) for agglomerating said given quantity of said pulverulent metallic material under pressure, said die (10) including a heating device for supplying thermal energy to said given quantity of pulverulent metallic material (20) and bringing it to a given temperature lower than said melting temperature, said assembly further comprising a device for striking said punch in order to shock said given quantity of agglomerated pulverulent metallic material brought to said given temperature, in order to bind the grains of said pulverulent metallic material to each other so as to obtain one solid body (23);
**characterized in that** the assembly further includes a heat exchanger (24) to cause the dissipation of accumulated thermal energy in said solid body (23), while said punch (19) maintains said solid body (23) under pressure so as to obtain said mechanical component, and **in that** said heat exchanger (24) defines another cavity (40) having the same cylindrical symmetry, and **in that** said heat exchanger (24) is adapted to move opposite said die (10) such that said other cavity coincides with the extension of said one cavity (16).

7. Production assembly according to claim 6, **characterized in that** the assembly further includes a counter-punch (14) adapted to move coaxially opposite said punch (19).

8. Production assembly according to claim 6 or 7, **characterized in that** said one cavity (16) has cylindrical symmetry.

9. Production assembly according to claim 7, **characterized in that** said heat exchanger (24) has two half-shells (36, 39) adapted to form said other cavity (40).

10. Production assembly according to any of claims 6 to 9, **characterized in that** said heat exchanger (24) includes flow channels (26) for a heat exchange fluid.
